(19) Europäisches Patentamt
European Patent Office
Office européen des brevets

(11) Veröffentlichungsnummer : **0 414 001 B1**

(12) **EUROPÄISCHE PATENTSCHRIFT**

(45) Veröffentlichungstag der Patentschrift : **23.12.92 Patentblatt 92/52**

(21) Anmeldenummer : **90114706.6**

(22) Anmeldetag : **31.07.90**

(51) Int. Cl.$^5$ : **C01B 13/32,** C08G 77/58, C03C 8/02, C03C 17/04, C03C 17/25, B01J 19/12, C04B 35/00

# (54) Verfahren zur Photoinitiierten Steuerung der anorganischen Netzwerkbildung beim Sol-Gel-Prozess.

(30) Priorität : **01.08.89 DE 3925462**

(43) Veröffentlichungstag der Anmeldung : **27.02.91 Patentblatt 91/09**

(45) Bekanntmachung des Hinweises auf die Patenterteilung : **23.12.92 Patentblatt 92/52**

(84) Benannte Vertragsstaaten : **AT BE CH DE ES FR GB IT LI NL SE**

(56) Entgegenhaltungen :
**EP-A- 0 078 548**
**EP-A- 0 171 493**
**EP-A- 0 314 166**
**GB-A- 2 167 341**

(73) Patentinhaber :
**FRAUNHOFER-GESELLSCHAFT ZUR FÖRDERUNG DER ANGEWANDTEN FORSCHUNG E.V.**
**Leonrodstrasse 54**
**W-8000 München 19 (DE)**

(72) Erfinder : **Popall, Michael**
**Weingartenstrasse 26**
**W-8700 Würzburg (DE)**
Erfinder : **Schulz, Jochen**
**Am Schenkenfeld 41**
**W-8707 Veitshöchheim (DE)**
Erfinder : **Schmidt, Helmut**
**Am Schlossand 9**
**W-8705 Zellingen (DE)**

(74) Vertreter : **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40 (DE)**

**EP 0 414 001 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein photochemisch katalysiertes Verfahren zur Steuerung des Sol-Gel-Prozesses, mit dem strukturierte oder unstrukturierte, spannungsfreie Überzüge und Formkörper hergestellt werden können, insbesondere solche, die durch rein thermische Behandlung in Gläser oder Keramiken überführt werden können.

Die hydrolytische Polykondensation nach dem Sol-Gel-Prozeß ist ein dem Stand der Technik wohlbekanntes Verfahren zur Herstellung von amorphen anorganischen Netzwerken, die in Gläsern, Keramiken und anorganisch-organische Hybridwerkstoffe überführt werden können (siehe z. B. H. Schmidt, J. Non-Crystall. Solids, 100 (1988), S. 51, C. J. Brinker, loc. cit. S. 31 and J. Fricke. loc. cit. S. 169).

Monomere oder vorkondensierte hydrolysierbare und kondensierbare Verbindungen mit einem anorganischen Zentralatom werden durch Wasser- und gegebenfalls Katalysatorzugabe hydrolysiert und vorkondensiert, bis ein Sol entsteht; anschließend erfolgt, meist unter Zugabe eines pH-aktiven Katalysators, Kondensation bis zum Gel. Das Gel kann durch thermische und/oder Bestrahlungsbehandlung in die oben genannten Werkstoffe überführt werden.

Für viele Anwendungen wie z. B. in der Mikroelektronik, Optoelektronik sowie bei der Herstellung von optischen und von Fasermaterialien ist eine gezielte Initiierung bzw. Reaktionsführung des Sol-Gel-Prozesses sowie eine Strukturierung des darüber hergestellten Materials unabdingbar. Eine unstrukturierte, verlangsamende Beeinflussung ist für die spannungsfreie Herstellung von Beschichtungen und massiven Formkörpern erforderlich.

Die Steuerung des Reaktionsablaufes (Hydrolyse und Kondensationsreaktionen zum anorganischen Netzwerk) war bisher nur durch die Änderung der Reaktionstemperatur und/oder die Zugabe von Katalysatoren möglich. Diese beiden Steuerungsmöglichkeiten haben den folgenden Nachteil:

Temperatursteuerung:

Beim Aufheizen, das den Sol-Gel-Prozeß beschleunigt, und beim Abkühlen, das den Prozeß verlangsamt, entstehen Temperaturgradienten, die einen ungesteuerten Reaktionsgradienten hervorrufen. Das Aufheizen ist durch das Siede- bzw. Verdampfungsverhalten der Lösungsmittel des Sol-Gel-Prozesses limitiert. Hohe räumliche Auflösung der Wärmezufuhr, wie sie für eine Strukturierung eines Formkörpers oder eines Überzugs erforderlich ist, kann wegen der Wärmeleitung nicht erreicht werden.

Katalysatoren:

Katalysatoren zur Beschleunigung oder Verlangsamung des Sol-Gel-Prozesses beeinflussen diesen sofort nach Zugabe, d. h. eine Beschleunigung oder Verlangsamung der Reaktionen des Sol-Gel-Prozesses beginnt schon vor dem Erreichen einer Durchmischung. Dadurch entstehen nicht steuerbare Inhomogenitäten. Dieses Verhalten verhindert auch die Anwendung dieser Katalysatoren für Beschichtungen, bei denen die Vernetzung der anorganischen Bestandteile erst auf dem Substrat erfolgen soll. Eine gezielte Strukturierung mit diesem Verfahren ist nicht möglich.

Die einzige Möglichkeit, eine Strukturierung bei Beschichtungen zu bewirken, die nach dem Sol-Gel-Verfahren hergestellt wurden, bestand bisher darin, photochemisch aktive organische Substituenten in die Ausgangsverbindungen einzuführen, und diese bzw. deren Prepolymere strukturiert zu bestrahlen. Diese Verfahren wurden für zu strukturierende Überzüge von Materialien eingesetzt. Die Einführung dieser photochemisch aktiven Substituenten limitierte jedoch die Temperaturbeständigkeit der Sol-Gel-Materialien erheblich.

Ein weiteres, mit dem Stand der Technik nur schwierig zu bewältigendes Problem ist die gezielte Initiierung der Polykondensation von hochreaktiven Verbindungen von Keramik-bildenden Elementen. Die Wasserzugabe, die sehr vorsichtig zu geschehen hat, damit ein vorzeitiges Ausfallen der Hydroxide vermieden wird, erfolgt dabei durch schwierig steuerbare Verfahren wie der Zugabe von feuchtigkeitsbeladenen Trägern oder durch Absorption aus einer feuchtigkeitsbeladenen Atmosphäre.

Aufgabe der Erfindung ist es daher, ein Verfahren zu Verfügung zu stellen, das eine gezielte Steuerung der anorganischen Netzwerkbildung beim Sol-Gel-Prozeß ermöglicht, so daß eine Beschleunigung oder Verlangsamung des Prozesses oder eine Strukturierung des entstehenden Polykondensats durchgeführt werden kann.

Diese Aufgabe wird erfindungsgemäß durch ein Verfahren zur photoinitiierten Steuerung der anorganischen Netzwerkbildung beim Sol-Gel-Prozeß gelöst, das dadurch gekennzeichnet ist, daß man entweder

A) in einem flüssigen Reaktionsmedium ein oder mehrere hydrolytisch polykondensierbare Verbindungen von Glas oder Keramik aufbauenden Elementen, ausgenommen Siliciumverbindungen mit polymerisierbaren organischen Gruppen, einer hydrolytischen Polykondensation unter Bildung eines Sols unterwirft und

das entstandene Sol in Gegenwart eines Photoinitiators, der beim Bestrahlen den pH-Wert des Reaktionsmediums verändern kann, strukturiert oder unstrukturiert mit Strahlung eines Wellenlängenbereichs, in dem der Photoinitiator absorbiert, bestrahlt;

oder

B) in einem wasserfreien, einen Alkohol enthaltenden Reaktionsmedium, das ein oder mehrere hydrolytisch polykondensierbare Verbindungen von Elementen, die Glas oder Keramik aufbauen, und einen Photoinitiator, der beim Bestrahlen Wasser durch eine photochemische Reaktion oder eine Folgereaktion freisetzen kann, enthält, durch strukturiertes oder unstrukturiertes Bestrahlen mit Strahlung eines Wellenlängenbereichs, in dem der Photoinitiator absorbiert, Wasser freisetzt und so die hydrolytische Polykondensation bewirkt.

**Definitionen**

Alkylreste für die Zwecke dieser Erfindung sind z. B. geradkettige,verzweigte oder cyclische Reste mit 1 bis 20, vorzugsweise 1 bis 10, Kohlenstoffatomen und insbesondere niedere Alkylreste; niedere Alkylreste weisen 1 bis 6, vorzugsweise 1 bis 4 Kohlenstoffatome auf.

Beispiele für Alkyl sind Dodecyl, Octadecyl und niedere Alkylreste wie Methyl, Ethyl, n-Propyl, Isopropyl, n-Butyl, Isobutyl, sek-Butyl, t-Butyl n-Pentyl, n-Hexyl, Cyclopentyl und Cyclohexyl.

Die Alkoxy-, Alkoxyalkoxy, Acyloxy-, Alkylamino-, Dialkylamino-, Alkoxycarbonyl- und Alkylcarbonylreste leiten sich von den vorstehend genannten Alkylresten ab. Spezielle Beispiele sind: Methoxy, Ethoxy, n- und i-Propoxy, n-, sek- und t-Butoxy, Isobutoxy, β-Methoxyethoxy, Acetyloxy, Propionyloxy, Monomethylamino, Monoethylamino, Dimethylamino, Diethylamino, Methylcarbonyl, Ethylcarbonyl, Methoxycarbonyl und Ethoxycarbonyl.

Halogen bedeutet Fluor, Chlor, Brom und Iod.

"Strukturiertes Bestrahlen" heißt in dieser Anmeldung, daß durch Masken, Blenden oder Matrizen oder mit einer oder mehreren punktförmigen Lichtquellen (z.B. Lasern) bestrahlt wird, so daß nur ein Teil der Beschichtung oder des Körpers bestrahlt wird. Dadurch entsteht eine Struktur, die sich in einem Vernetzungs- und damit Dichtegradienten bemerkbar macht, oder darin, daß man die Teile, die durch die Bestrahlung nicht aktiviert wurden, mit einem geeigneten Lösungmittel entfernen kann.

**Polykondensationsfähige Verbindungen**

Elemente, die Glas bzw. Keramik aufbauen, sind Elemente der Hauptgruppen Ia bis Va und der Nebengruppen IIb bis VIIIb des Periodensystems, vorzugsweise Si, Al, B, Pb, Sn, Ti, Zn, Zr und die Lanthaniden, z.B. Ce, La, Y und Nd. Im Gemisch mit diesen können auch die Elemente Phosphor, Arsen, Antimon, Wismut, Chrom, Molybdän, Wolfram, Mangan, Eisen, Cobalt, Nickel, Vanadium und die Alkali- und Erdalkalimetalle vorliegen.

Bevorzugte Verbindungen des Siliciums, die im erfindungsgemäßen Verfahren eingesetzt werden, weisen die allgemeine Formel (I)

$$R_{4-x}SiR^1_x \qquad (I)$$

auf, in der x 0 bis 3 ist,

die Reste R, die gleich oder verschieden sein können, hydrolysierbare Reste wie Wasserstoff, Hydroxy, Halogen, Alkoxy, Alkoxyalkoxy, Acyl, Acyloxy, Alkoxycarbonyl oder $NR'_2$ (R′ = H und/oder Alkyl) sind,

die Reste $R^1$, die gleich oder verschieden sein können, nicht-polymerisierbare, nicht-hydrolysierbare organische Gruppen wie Alkyl, Phenyl, Phenylalkyl und Alkylphenyl, die gegebenenfalls mit Halogen oder $NR'_2$ substituiert sein können, sind, wobei diese Reste durch O- oder S-Atome oder die Gruppe -NR′- unterbrochen sein können.

Spezielle Beispiele für die Gruppen R sind Methoxy, Ethoxy, n- und i-Propoxy, n-, sek- und t-Butoxy, Isobutoxy, β-Methoxyethoxy, Acetyloxy, Propionyloxy, Monomethylamino, Monoethylamino, Dimethylamino, Diethylamino, N-Ethylanilino, Methylcarbonyl, Ethylcarbonyl, Methoxycarbonyl und Ethoxycarbonyl.

Spezielle Beispiele für die Gruppen $R^1$ in Formel (I) sind Methyl, Ethyl, 3-Aminopropyl, 5-Chlorpentyl, 3-Phenylethyl, Chlorphenyl, 4-Aminophenylmethyl, 4-i-Propylphenyl.

Konkrete Beispiele für Verbindungen der Formel (I) sind:

x = 0: $Si(OCH_3)_4$, $Si(OC_2H_5)_4$, $Si(O\text{-}n\text{- oder -}i\text{-}C_3H_7)_4$, $Si(OC_4H_9)_4$, $SiCl_4$, $HSiCl_3$, $Si(OOCCH_3)_4$.

x = 1: $CH_3\text{-}Si\text{-}Cl_3$, $CH_3\text{-}Si\text{-}(OC_2H_5)_3$, $C_2H_5\text{-}Si\text{-}Cl_3$, $C_2H_5\text{-}Si\text{-}(OC_2H_5)_3$, $C_3H_7\text{-}Si\text{-}(OCH_3)_3$, $(CH_3O)_3\text{-}Si\text{-}C_3H_6\text{-}Cl$, $(CH_3O)_3\text{-}Si\text{-}C_3H_6\text{-}NH_2$, $(C_2H_5O)_3\text{-}Si\text{-}C_3H_6\text{-}NH_2$, $H_2N\text{-}CH_2\text{-}CH_2\text{-}NH\text{-}C_3H_6\text{-}Si\text{-}(OCH_3)_3$, $H_2N\text{-}CH_2\text{-}$

$CH_2$-NH-$CH_2$-$CH_2$-NH-$C_3H_6$-Si-$(OCH_3)_3$,

x = 2: $(CH_3)_2$-Si-$Cl_2$, $(CH_3)_2$-Si-$(OC_2H_5)_2$, $(C_2H_5)_2$-Si-$(OC_2H_5)_2$, $(C_2H_5O)_2(CH_3)$Si-$C_3H_6$-$NH_2$,

X = 3: $(CH_3)_3$-Si-Cl, $(C_2H_5)_3$-Si-Cl, (t-$C_4H_9$)$(CH_3)_2$-Si-Cl

Diese Silane sind zum Teil Handelsprodukte oder sie lassen sich nach bekannten Methoden herstellen: vgl. W. Noll, "Chemie und Technologie der Silicone", Verlag Chemie, Weinheim/Bergstraße (1968).

Bei der erfindungsgemäßen Verfahrensvariante, in der das zur Hydrolyse benötigte Wasser photochemisch erzeugt wird, können auch Verbindungen der Formel (I) eingesetzt werden, die thermisch und/oder photochemisch polymerisierbare Reste enthalten. Solche Reste sind beispielsweise gegebenfalls substituierte Alkenyl- und Alkinylreste, z. B. geradkettige, verzweigte oder cyclische Reste mit 2 bis 20, vorzugsweise 2 bis 10 Kohlenstoffatomen und mindestens einer C-C-Doppel- oder Dreifachbindung und insbesondere niedere Alkenylreste und Alkinylreste, wie Vinyl, 1- und 2-Propenyl, Butenyl, Isobutenyl, Styryl und Propargyl. Besonders bevorzugt werden Reste $R^1$ mit aktivierten C-C-Mehrfachbindungen, z. B. Gruppen, die einen Methacryl- oder Acrylrest umfassen. Als bevorzugte Beispiele für Reste, die eine Epoxygruppe umfassen, seien Glycidyloxyalkyl, insbesondere solche mit 1 bis 4 Kohlenstoffatomen im Alkylteil, genannt. Ein besonders bevorzugtes Beispiel stellt γ-Glycidyloxypropyl dar. Konkrete Beispiele für polymeriesierbare Verbindungen der allgemeinen Formel (I), die erfindungsgemäß eingesetzt werden, sind γ-(Meth)acryloxypropyltrimethylsilan, Vinyltrichlorsilan, Vinyltrimethoxysilan, Vinyltriacetoxysilan, Vinyltriethoxysilan, Vinyl-tris(β-methoxyethoxy)silan, Trimethoxy-1-propen-3-ylsilan, Triethoxy-1-propen-3-ylsilan, sowie γ-Glycidyloxypropyltrimethoxysilan und

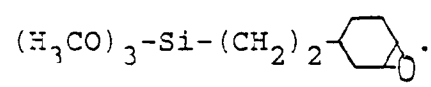

Siliciumverbindungen, bei denen x > 0 ist, sind Ausgangsverbindungen für anorganisch-organische Hybridwerkstoffe. Erfindungsgemäß werden sie nicht alleine eingesetzt, sondern in Gemisch mit Silciumverbindungen der Formel (I), in denen x = 0 ist oder mit Verbindungen der anderen Elemente, die zur Bildung von Glas oder Keramik herangezogen werden.

Erfindungsgemäß verwendbare Verbindungen des Aluminiums sind Verbindungen der allgemeinen Formel

$$AlR^2_3 \qquad (II)$$

in welcher die Reste $R^2$, die gleich oder verschieden sein können, Halogen, Alkyl, Alkoxy, Acyloxy oder Hydroxy sind, wobei die soeben genannten Gruppen ganz oder teilweise durch Chelatliganden ersetzt sein können, die Sauerstoffatome an den komplexierenden Stellen aufweisen. Solche Chelatliganden sind z. B. Acetylaceton oder Acetessigsäureethylester.

Auch Aluminiumsalze anorganischer oder organischer Säuren, wie z. B. $HNO_3$, $H_2SO_4$, $H_3PO_4$ und Ameisensäure, Essigsäure, Propionsäure und Oxalsäure, können eingesetzt werden. In diesem Fall wird ebenfalls die Komplexierung mit einem Chelatliganden bevorzugt.

Konkrete Beispiele für erfindungsgemäß bevorzugte Aluminiumverbindungen sind $Al(OCH_3)_3$, $Al(OC_2H_5)_3$, Al(O-n-$C_3H_7$)$_3$, Al(O-i-$C_3H_7$)$_3$, $Al(OC_4H_9)_3$, Al(O-i-$C_4H_9$)$_3$, Al(O-sek-$C_4H_9$)$_3$, $AlCl_3$, $AlCl(OH)_2$, Aluminiumformiat, Aluminiumacetat und Aluminiumoxalat sowie die entsprechenden (teilweise) chelatisierten Verbindungen wie z.B. die Acetylacetonate. Bei Raumtemperatur flüssige Verbindungen, wie z.B. Al(O-sek-$C_4H_9$)$_3$ und Al(O-i-$C_3H_7$)$_3$ werden besonders bevorzugt.

Bei einer weiteren Gruppe von erfindungsgemäß bevorzugt eingesetzten, hydrolytisch polykondensierbaren Verbindungen handelt es sich um solche der allgemeinen Formel (III)

$$MR^3_4 \qquad (III)$$

in welcher M für Titan oder Zirkonium steht und die Reste, $R^3$ die gleich oder verschieden sein können, Halogen, Alkoxy oder Acyloxy bedeuten, wobei diese Gruppen ganz oder teilweise durch Chelatliganden ersetzt sein können, und/oder ein davon abgeleitetes Oligomeres. Hinsichtlich der Chelatliganden gilt das bereits für die Aluminiumverbindungen Gesagte.

Konkrete Beispiele für Titan- oder Zirkonverbindungen der Formel III sind $TiCl_4$, $ZrCl_4$, $Ti(OC_2H_5)_4$, $Ti(OC_3H_7)_4$, Ti(O-i-$C_3H_7$)$_4$, $Ti(OC_4H_9)_4$, Ti(kresyl)$_4$, Zr(O-i-$C_3H_7$)$_4$, $Zr(OC_4H_9)_4$, Ti(acetylacetonato)$_2$(O-i$C_3H_7$)$_2$, Zr(acetylacetonato)$_4$, Ti(2-ethylhexoxy)$_4$ und andere Titan- oder Zirkonkomplexe mit Chelatliganden, die vorzugsweise über Sauerstoff und/oder Stickstoff koordiniert sind.

Unter den weiteren, oben noch nicht speziell genannten hydrolytisch polykondensierbaren Verbindungen, die erfindungsgemäß mit Vorteil eingesetzt werden können, befinden sich im Reaktionsmedium lösliche, schwerflüchtige Oxide oder derartige schwerflüchtige Oxide bildende Verbindungen von Elementen der Hauptgruppen Ia bis Va oder der Nebengruppen IIb, IIIb, Vb bis VIIIb des Periodensystems. Vorzugsweise lei-

ten sich diese von folgenden Elementen ab: Alkalimetalle wie Na, K und Rb; Erdalkalimetalle, wie Mg und Ca; B, Sn, Pb, P, As, Sb, Bi, Cr, Mo, W, Mn, Fe, Co, Ni, Zn, V und Lanthaniden, wie Ce, La, Y oder Nd.

Im Reaktionsmedium lösliche, schwerflüchtige Oxide bildende Verbindungen sind z.B. anorganische Säuren, wie Phosphorsäure und Borsäure, sowie deren Ester. Ferner eignen sich z.B. Hydroxide, wie NaOH, KOH und $Ca(OH)_2$, Halogenide, wie $SnCl_4$ und $PCl_5$, und Alkoxide wie $Ca(OR)_2$, $Sn(OR)_4$ und $VO(OR)_3$, wobei sich R von niederen Alkoholen, wie Methanol, Ethanol, Propanol oder Butanol, ableitet. Weitere verwendbare Ausgangsverbindungen sind entsprechende Salze mit flüchtigen Säuren, z.B. Acetate, wie Nickelacetat, basische Acetate, wie basisches Bleiacetat, und Formiate.

Alle erfindungsgemäß eingesetzten Verbindungen können gegebenfalls auch in vorkondensierter Form vorliegen.

Weitere zur Herstellung eines anorganischen Netzwerks besonders bevorzugte Mischungen von Reaktionskomponenten sind z.B. in der EP-A-171493 beschrieben.

**Photoinitiierung**

Ein wesentlicher Gesichtspunkt der vorliegenden Erfindung ist die Verwendung eines Initiators oder Katalysators für die Polykondensation, der in einer photochemischen Reaktion oder einer Folgereaktion mit dem Reaktionsmedium entweder den pH-Wert desselben verändert oder Wasser freisetzt und damit die Bildung des anorganischen Netzwerkes zeitlich und räumlich gezielt beeinflußt.

Geeignete Photoinitiatoren sind Verbindungen mit Keton- oder Ketalfunktionen wie Irgacure 184 (1-Hydroxycyclohexylphenylketon), Irgacure 500 (1-Hydroxycyclohexylphenylketon + Benzophenon), Irgacure 907 (2-Methyl-1-[4-(methylthio)phenyl]-2-morpholinopropan-1-on) und andere von der Firma Geigy erhältliche Photoinitiatoren vom Irgacure-Typ; Darocur 1173 (2-Hydroxy-2-methyl-1-phenylpropan-1-on), Darocur 1116 (1-(4-Isopropylphenyl)-2-hydroxy-2-methylpropan-1-on), Darocur 1664 (Mischungen von Arylketonen des Benzophenon-Typs), Darocur 1398, 1174, und 1020 (erhältlich von der Firma Merck), Benzophenon, 2-Chlorthioxanthon, 2-Methylthioxanthon, 2-Isopropylthioxanthon, Benzoin, 4,4′-Dimethoxybenzoin, Benzoinethylether, Benzoinisopropylether, Benzildimethylketal, 1,1,1-Trichloracetophenon, Diethoxyacetophenon und Dibenzosuberon; und Peroxide wie z.B. Dibenzoylperoxid und t-Butylperbenzoat. Diese Photoinitiatoren erniedrigen den pH-Wert des Reaktionsmediums. Geeignet sind z.B. auch Peroxydicarbonate und Azobisisobutyronitril.

Ein Absorptionsbereich dieser Photoinitiatoren liegt im allgemeinen zwischen etwa 190 und 360 nm. So weist z. B. 1-Hydroxycyclohexylphenylketon Absorptionsbanden bei 250 und 350 nm und t-Butylperbenzoat eine Absorptionsbande bei 290 nm auf.

Die Reaktionsgeschwindigkeit des Polykondensationsprozesses ist stark pH-abhängig (siehe E.J.A. Pope, J. Non-Cryst. Solids, 87 (1986), S. 185 - 198). Für eine optimale Kondensationsreaktion ist eine saure oder basische Katalyse erforderlich. Herkömmliche Katalysatoren sind organische oder anorganische Säuren, wie Salzsäure und Essigsäure, organische und anorganische Basen wie Ammoniak, Alkali- und Erdalkalimetallhydroxide und im Reaktionsmedium lösliche Amine. Eine räumlich veränderliche pH-Beeinflussung, die für eine strukturierend wirkende Änderung der Reaktionsgeschwindigkeit sorgen würde, ist damit nicht zu erreichen. Eine Verlangsamung oder Beschleunigung der gesamten Reaktion zu einem Zeitpunkt, wo diese nicht mehr gerührt werden kann, ist damit genauso wenig möglich.

Eine initiale Reaktionssteuerung ist bei der Polykondensationsreaktion sehr reaktiver Reaktionsmischungen zur Herstellung von Keramiken auf herkömmliche Art nur schwierig zu erreichen. Eine räumlich veränderliche Beeinflussung der initialen Reaktion ist auf herkömmliche Weise undurchfürbar.

Die erfindungsgemäßen Photoinitiatoren werden nur bei Bestrahlen wirksam, wobei sie den pH-Wert des Sols an den belichteten Stellen entweder erniedrigen oder erhöhen können und damit die Kondensationsreaktion entweder beschleunigen oder verlangsamen können; oder sie sorgen für das Freisetzen von Wassser an den belichteten Stellen und steuern so die hydrolytische Polykondensation bereits im Anfangsstadium.

Der Mechanismus der pH-Erniedrigung oder pH-Erhöhung ist noch ungeklärt. Auf jeden Fall dürfte aber eine Reaktion des photoinitiierten Radikals mit Wasser und/oder Alkohol im ersten Schritt erfolgen, wie im folgenden Reaktionsschema am Beispiel von Carbonylverbindungen erläutert:

$$R^3\text{-CO-}R^4 \xrightarrow{h\nu} R^3\text{-CO}\cdot \xrightarrow{+\,H_2O} R_3\text{-COOH}\cdot + H^+$$

$$\text{oder } R^3\text{-COOH} + H\cdot$$

und/oder

$$R^3\text{-CO-}R^4 \xrightarrow{h\nu} R^3\text{-CO}\cdot \xrightarrow{+R^5OH} R^3\text{-C(O)O}R^5 + H^+$$

Die Reste $R^3$ und $R^4$ sind dabei die organischen, mit den Carbonylgruppen verbundenen Reste der vorstehend genannten Carbonylgruppen enthaltenden Photoinitiatoren. Der Rest $R^5$ ist ein beliebiger organischer Rest eines Alkohols.

Verschiedene Reaktionsführungen sind unter Beeinflussung des pH-Werts durchführbar:

a) Das durch Vorkondensation unter herkömmlichen Bedingungen erhaltene, mit einem erfindungsgemäßen Photoinitiator versehene Sol wird bei einem neutralen pH-Wert belassen oder auf ihn eingestellt. Durch (gegebenfalls strukturiertes) Bestrahlen wird an den bestrahlten Stellen der pH-Wert erhöht oder erniedrigt. In beiden Fallen läuft an den bestrahlten Stellen die Kondensationsreaktion schneller ab.

b) Das mit einem erfindungsgemäßen Photoinitiator versehene Sol wird auf einen mäßig alkalischen pH-Wert (vorzugsweise bis pH 9) eingestellt. Durch (gegebenfalls strukturiertes) Bestrahlen wird an den bestrahlten Stellen der pH-Wert erniedrigt, bis er möglichst neutral wird. An den bestrahlten Stellen läuft die Kondensationsreaktion langsamer ab.

c) Das mit einem erfindungsgemäßen Photoinitiator versehene Sol wird auf einen mäßig sauren Wert (vorzugsweise bis pH 4,5) eingestellt. Durch (gegebenenfalls strukturiertes) Bestrahlen wird an den bestrahlten Stellen der pH-Wert erhöht, bis er möglichst neutral wird. An den bestrahlten Stellen läuft die Kondensationreaktion langsamer ab.

Die pH-Wert-Änderung hängt von der Bestrahlungsdauer ab. Bei längerer Dauer ist sie größer (siehe Fig. 1). Wenn die Bestrahlungsquelle abgeschaltet wird, findet keine Änderung des pH-Werts mehr statt.

Die photoinitiierte Wasserfreisetzung kann mit Peroxiden, wie Perbenzoaten und Dibenzoylperoxid, als Photoinitiatoren in der Gegenwart von Alkoholen wie folgt ablaufen:

$$R^6\text{-C(O)O-O}R^7 \xrightarrow{h\nu} R^6\text{-C(O)O}\cdot + \cdot OR^7 \;;$$

$$R^6\text{-C(O)O}\cdot + \text{H-Lösungsmittel} \rightarrow R^6\text{-COOH}$$

$$R^6\text{-COOH} + R^{5'}OH \rightleftharpoons R^6\text{-COO}R^{5'} + H_2O$$

Der Rest $R^6$ steht dabei für einen gegebenenfalls substituierten Benzolrest, der Rest $R^7$ für einen aliphatischen oder aromatischen Esterrest und der Rest $R^{5'}$ für Alkyl oder Cycloalkyl mit bis zu 6 Kohlenstoffatomen.

Bei der photoinitiierten Wasserfreisetzung in Gegenwart eines Alkohols mit Hilfe von Photoinitiatoren, die Carbonylgruppen enthalten, wird ein Cokatalysator verwendet, der unter sauren oder alkalischen Bedingungen leicht Wasser abspaltet. Solche Verbindungen sind beispielsweise geminale Diole, z. B. isolierbare Hydrate von Carbonylverbindungen wie Chloralhydrat oder 1,1-Dihydroxycyclopropan, die Hemihydrate von Aldehyden mit mehr als 7 C-Atomen, Verbindungen, die in α- oder β-Position zu mindestens einer Carbonyl-, Carboxyl, Nitril-, Nitro- oder Sulfonylgruppe eine Hydroxylgruppe aufweisen und unter Wasserabspaltung zu einem konjugierten ungesättigten System reagieren, z.B. Apfelsäure und Citronensäure und deren Ester und Nitrile, und tertiäre Alkohole mit einem α-Wasserstoff, wie z.B. tert-Butanol und 1-Methylcyclohexan-1-ol.

Ein möglicher Reaktionsablauf zur Wasserfreisetzung mit Hilfe dieser Cokatalysatoren ist der folgende:

$$R^3\text{-CO-O}R^4 \xrightarrow{h\nu} R^3\text{-CO}\cdot + R^4O\cdot$$

$$R^3\text{-CO}\cdot + R^5OH \rightarrow R^3\text{-COO}R^5 + H^+$$

$$H^+ + (OH)_2CR^8R^9 \text{—} O{=}CR^8R^9 + H^+ + H_2O$$

Die Reste $R^3$, $R^4$ und $R^5$ sind dabei wie oben definiert; die Reste $R^8$ und $R^9$ sind die organischen Reste der oben genannten stabilen geminalen Diole, wobei einer der beiden Reste Wasserstoff sein kann.

**Durchführung des Verfahrens**

**Verfahrensvariante A:**

Wenn im erfindungsgemäßen Verfahren eine photoinitiierte pH-Steuerung der hydrolytischen Polykondensation auf der Stufe des Übergangs von Sol zum Gel stattfinden soll, wird die Herstellung des Sols in Analogie zu der im Sol-Gel-Prozeß üblichen Art und Weise durchgeführt. So kann die Hydrolyse mit oder ohne Lösungsmittel durchgeführt werden. Falls die Ausgangsverbindungen in flüssiger Form vorliegen, kann sich der Einsatz eines Lösungsmittels erübrigen. Geeignete polare Lösungsmittel für die Durchführung des Sol-Gel-Prozesses sind z.B. niedere Alkanole, wie Methanol, Ethanol und Isopropanol, Ketone, vorzugsweise niedere Dialkylketone wie Aceton und Methylisobutylketon, Ether, vorzugsweise niedere Alkylether, wie Diethylether und Tetrahydrofuran, Amide, wie Dimethylformamid, und Ester, wie Essigsäureethylester, und deren Gemische. Hiervon sind mit Wasser mischbare Lösungsmittel oder Lösungsmittelgemische besonders bevorzugt.

Der Photoinitiator wird den Ausgangsverbindungen zweckmäßigerweise sofort zugemischt, er kann aber auch während des Hydrolyse-Prozesses oder an dessen Ende, wenn der Sol-Zustand erreicht ist, zugesetzt werden. Auch die anderen Ausgangsverbindungen müssen nicht notwendigerweise bereits alle zu Beginn der Hydrolyse vorhanden sein; in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Die Menge an eingesetztem Photoinitiator kann je nach den Anforderungen an die pH-Veränderung sehr stark variieren. Im allgemeinen werden 2 bis 25 Gewichtsprozent bezüglich der Ausgangsverbindungen eingesetzt, bei der Herstellung von Beschichtungen bevorzugt 10 bis 15 Gewichtsprozent und bei der Herstellung von Formkörpern im allgemeinen 2 bis 10, bevorzugt 4 bis 7, Gewichtsprozent. Erfindungsgemäß ist es auch möglich, mehr als einen Photoinitiator einzusetzen. Dies ermöglicht beim Bestrahlen mit verschiedenen Wellenlängen und gegebenfalls zu verschiedenen Zeiten eine große Variationsbreite an Dichtegradienten.

Die Mengen und Mengenverhältnisse der Ausgangsverbindungen richten sich nach den Erfordernissen des erwünschten anorganischen Netzwerkes. Sie können vom Fachmann gegebenenfalls mit Hilfe orientierender Versuche leicht festgestellt werden.

Bei der Verfahrensvariante A erfolgt die Wasserzugabe zur Hydrolyse in der auf diesem Gebiet üblichen Art und Weise. So kann man die Ausgangsverbindungen, gegebenfalls im Gemisch mit dem oder den Photoinitiator(en), als solche oder gelöst in einem der oben erwähnten Lösungsmittel mit der stöchiometrisch erforderlichen Menge an Wasser, bevorzugt aber mit einem Überschuß an Wasser, auf einmal oder stufenweise in Kontakt bringen. Die Hydrolyse erfolgt in der Regel bei Temperaturen zwischen -20 und 130°C, vorzugsweise zwischen 0 und 30°C bzw. dem Siedepunkt des gegebenenfalls eingesetzten Lösungsmittels. Die beste Art und Weise des Inkontaktbringens hängt unter anderem von der Reaktivität der eingesetzten Ausgangsverbindungen ab. So kann man z. B. die gelösten Ausgangsverbindungen langsam zu einem Überschuß an Wasser tropfen oder man gibt Wasser in einer oder mehreren Portionen den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionsgefäß einzutragen. Als besonders geeignet hat sich in vielen Fällen die Eintragung der Wassermengen in das Reaktionsgemisch mit Hilfe von feuchtigkeitsbeladenen Adsorbentien, z. B. Molekularsieben, und wasserhaltigen organischen Lösungsmitteln, z. B. 80%igem Ethanol, erwiesen. Die Wasserzugabe kann auch über eine Reaktion erfolgen, bei der Wasser gebildet wird, z. B. bei der Esterbildung aus Säure und Alkohol.

In vielen Fällen wird es bevorzugt, die Wasserzugabe in mehreren Stufen, z. B. in drei Stufen, durchzuführen. Dabei wird in der ersten Stufe z. B. ein Zehntel bis ein Zwanzigstel der zur Hydrolyse stöchiometrisch benötigten Wassermenge zugegeben. Nach kurzem Rühren erfolgt die Zugabe von einem Fünftel bis einem Zehntel der stöchiometrischen Wassermenge und nach weiterem kurzen Rühren wird schließlich eine stöchiometrische Wassermenge zugegeben, so daß am Schluß ein leichter Wasserüberschuß vorliegt.

Die Hydrolyse und Solbildung kann gegebenfalls unter Zusatz eines herkömmlichen Katalysators, z. B. einer Protonen- oder Hydroxidionen-abspaltenden Verbindung oder eines Amins erfolgen. Beispiele für geeignete Katalysatoren sind organische oder anorganische Säuren, wie Salzsäure oder Essigsäure, organische oder anorganische Basen, wie Ammoniak, Alkali- oder Erdalkalimetallhydroxide, z. B. Natrium-, Kalium- oder Calciumhydroxid, und im Reaktionsmedium lösliche Amine, z. B. niedere Alkylamine oder Alkanolamine. Flüchtige Säuren und Basen, insbesondere Salzsäure, Ammoniak und Triethylamin, werden besonders bevorzugt. Der eingestellte pH-Wert sollte jedoch nicht zu niedrig bzw. zu hoch sein, da er, zumindest stellenweise, bei der nachfolgenden Polykondensation durch die durch den Photoinitiator freiwerdenden Protonen bzw. Hydroxidionen auf einen annähernd neutralen Wert gebracht werden soll. Eine obere pH-Wert-Grenze von 9 und eine untere pH-Wert-Grenze von 4,5 sind empfehlenswert. Natürlich kann durch Einsatz entsprechend großer

Mengen an Photoinitiatoren auch ein größerer bzw. kleinerer pH-Wert annähernd neutralisiert werden.

Die Zeitdauer, die zum Erreichen der vollständigen Hydrolyse und des Sol-Zustands erforderlich ist, hängt von den eingesetzten Ausgangsverbindungen und den Reaktionsbedingungen ab.

Die Lagerdauer des Sols hängt von dessen Komponenten und dessen pH-Wert ab. Bei neutralem pH-Wert ist die Lagerfähigkeit am längsten. Die Abschätzung dieser Faktoren ist jedoch dem Fachmann geläufig.

Vor der Weiterverarbeitung wird das überschüssige Lösungsmittel gegebenfalls vorsichtig aus dem Sol abdestilliert. Schließt die Weiterverarbeitung eine Beschichtung ein, kann man das Sol unter Umständen auch einfach trocknen lassen.

Das Sol kann nun in Form einer Beschichtung weiterverarbeitet werden, wozu es auf ein Substrat mit üblichen Beschichtungsverfahren, wie Tauchen, Fluten, Gießen, Schleudern, Spritzen oder Aufstreichen aufgetragen wird. Als Substrate im Fall der Herstellung einer Beschichtung eignen sich alle Werkstoffe, die den Temperaturen bei der späteren Umwandlung in ein Glas, eine Keramik oder einen getemperten anorganisch-organischen Hybridwerkstoff standhalten können. Bevorzugt werden als Substrate Glas, Keramik und Metalle, z. B. Stahl, Aluminium und Buntmetalle, eingesetzt. Die Oberfläche dieser Substrate kann gegebenenfalls vor Auftragung des Gels auf geeignete Art und Weise vorbehandelt werden, z. B. durch Auslaugen, Ausheizen, Grundierung mit einem Primer und Coronabehandlung (zur Verbesserung der Haftung).

Das Sol kann auch als Formkörper weiterverarbeitet werden. Dazu wird es beispielsweise in eine geeignete UV-strahlungsdurchlässige Gußform oder Spritzgußform (z. B. aus Polypropylen oder Quarz, dessen Haftfähigkeit vermindert wurde) oder in eine geeignete, oben offene Form, die wenig Haftwirkung zeigt, gegeben oder das Sol wird durch Strangpressen geformt.

Wenn das Sol als Beschichtung oder als Formkörper vorliegt, wird entweder strukturiert oder unstrukturiert bestrahlt. Das Bestrahlen geschieht zweckmäßigerweise mit einer Quecksilbernieder-, -mittel- oder -hochdrucklampe oder mit einem oder mehreren Lasern. Die Auswahl der Bestrahlungswellenlänge hängt vom Absorptions-Wellenlängenbereich des eingesetzten Photoinitiators ab, dessen starke Absorptionsbanden gewöhnlich zwischen ungefähr 190 und 360 nm liegen. Wenn mehr als ein Photokatalysator eingesetzt wurde, bestrahlt man zweckmäßigerweise mit mehreren Laserwellenlängen, die den Absorptionsmaxima der verschiedenen Photokatalysatoren entsprechen, simultan oder zeitlich versetzt, gegebenfalls mit unterschiedlicher Zeitdauer.

Die Auswirkung der Bestrahlung auf die Änderung im pH-Wert wurde oben besprochen. Auf die Materialeigenschaften hat die Bestrahlung die im folgenden aufgeführten Wirkungen:

War der Ausgangs-pH-Wert annähernd neutral, wird an den bestrahlten Stellen eine beschleunigte Polykondensation bewirkt, deren Beschleunigung von der Bestrahlungsdauer abhängt. An diesen Stellen bildet sich ein anorganisches Netzwerk, während an den nicht bestrahlten Stellen eine solche Netzwerkbildung unter Umständen so gut wie unterbleibt. Die nicht-bestrahlten Stellen sind dann mit einem geeigneten Lösungsmittel, wie z. B. Essigsäureethylester, herauslösbar, wodurch eine räumliche Struktur entsteht. Es können auch Strukturen von Gradienten im Vernetzungsgrad erreicht werden. Die bestrahlten Stellen weisen dann eine höhere Dichte als die unbestrahlten Stellen auf. Werden verschiedene Stellen verschieden lange bestrahlt, kann eine ganze Skala von Dichteunterschieden hergestellt werden und damit eine komplizierte Dichtegradienten-Struktur entstehen. Bei unstrukturierter Bestrahlung erreicht man in diesem Fall eine Beschleunigung des gesamten Kondensationsvorganges.

War der Ausgangs-pH-Wert sauer oder basisch, so kann man gegen Ende der Polykondensation die Reaktion durch unstrukturierte Bestrahlung verlangsamen, indem der pH-Wert des entstehenden Gels in Richtung Neutralpunkt verschoben wird. Dadurch können spannungsfreie Beschichtungen und insbesondere spannungsfreie Formkörper hergestellt werden. Wenn strukturiert bestrahlt wird, läuft an den bestrahlten Stellen die Kondensationsreaktion langsamer ab, es entsteht wieder eine Struktur von Dichte-Gradienten oder die bestrahlten Stellen lassen sich mit einem geeigneten Lösungsmittel, wie Essigsäureethylester, herauslösen.

Im Anschluß an die Polykondensation unter Bestrahlung können im erfindungsgemäßen Verfahren gegebenenfalls weniger vernetzte Stellen des Gels aus der Beschichtung oder dem Formkörper herausgelöst werden. Dazu eignen sich Lösungsmittel, wie Essigsäureethylester, Alkohole oder Methylenchlorid und Mischungen derselben. Auch verdünnte Laugen, z. B. 0,2N NaOH, lassen sich zu diesem Zweck einsetzen.

Zur Umwandlung des oben erzeugten polykondensierten anorganischen Netzwerkes in Glas, Keramik oder gehärtete anorganisch-organischen Hybridwerkstoffe schließt sich an das obige Verfahren eine Wärmebehandlung z.B. bei Temperaturen im Bereich von 550 - 1200°C (Glas), 1300 - 2000°C (Keramik) und 90 - 280°C (anorganisch-organische Hybridwerkstoffe) an, bei der das entstandene Polykondensat zunächst von Lösungsmittel- und Wasserresten befreit und dann getempert oder gesintert wird. Eventuelle Dichteunterschiede bleiben bei sachgemäßer Wahl der Temperatur erhalten (siehe z. B. C. J. Brinker et al., J. Non-Crystall. Solids 48 (1982), S. 47)

**Verfahrensvariante B:**

Die erfindungsgemäße Steuerung des Sol-Gel-Prozesses durch photoinitiierte Wasserabspaltung wird bevorzugt bei der Verwendung hochreaktiver Verbindungen von Keramik-aufbauenden Elementen, insbesondere Aluminium, Titan und Zirkonium, angewendet. Naturlich ist eine Anwendung beim Einsatz von weniger reaktiven Verbindungen von Elementen, die Glas und Keramik aufbauen, auch möglich. Die Bestrahlung erfolgt dabei bereits auf der Stufe der Sol-Bildung. Die polykondensierbaren Verbindungen werden zusammen mit dem Photoinitiator und gegebenfalls einem Cokatalysator, der Wasser abspalten kann, möglichst unter einer Schutzatmosphäre in einem wasserfreien Alkohol oder einem wasserfreien Lösungsmittelgemisch (wobei die oben aufgeführten Lösungsmittel verwendet werden), das Alkohol, im allgemeinen mindestens 10 Vol.-%, enthält, gelöst. Geeignete Alkohole sind vor allem primäre und sekundäre Alkanole und Cycloalkanole mit bis zu 6 Kohlenstoffatomen, z.B. Methanol, Ethanol, n-Propanol, Isopropanol und Cyclohexanol.

Die Menge des Photoinitiators und gegebenenfalls des Cokatalysators richtet sich nach dem gewünschten Effekt. Eine vollständige Hydrolyse ist am geeignetsten mit einem Photoinitiator-/Cokatalysatorgemisch erreichbar, wobei der Photoinitiator im allgemeinen einen Gewichtsanteil von 5 bis 25% bezogen auf die Ausgangsverbindungen aufweist, und der Cokatalysator in mindestens stöchiometrischer, gegebenenfalls bis zu fünffacher stöchiometrischer Menge eingesetzt wird. Falls lediglich unterstöchiometrische Mengen an Wasser freigesetzt werden sollen, wird entsprechend weniger Cokatalysator eingesetzt, oder man verwendet ein Peroxid, wie ein Perbenzoat oder Dibenzoylperoxid, als alleinigen Photoinitiator/wasserfreisetzenden Katalysator.

Sobald mit der Bestrahlung begonnen wird, beginnt sich Wasser zu bilden. Durch die Dauer der Bestrahlung, die auch intervallmäßig durchgeführt werden kann, läßt sich die hydrolytische Polykondensationsreaktion genau steuern (im Fall von Photoinitiator und Cokatalysator geschieht dies über den pH-Wert, im Fall von Perbenzoaten und Dibenzoylperoxid entsteht Wasser ausschließlich über eine Folgereaktion des daraus photochemisch erzeugten Radikals). So kann ein vorzeitiges Ausfallen von Hydroxidniederschlägen vermieden werden. Wenn nur ein Teil des erforderlichen Wassers photochemisch freigesetzt wird, wird im Anschluß an die Bestrahlung auf eine geeignete Weise, wie oben beschrieben, weiteres Wasser zugegeben. Man erhält so ein Sol, das auf herkömmliche Weise oder auf die oben beschriebene Weise, also unter Bestrahlen, zum Gel weiterverarbeitet wird.

Die Bestrahlung kann auch in diesem Fall strukturiert durchgeführt werden. Eine strukturierte Bestrahlung führt z.B. bei viskosen Ausgangslösungen, die man beispielsweise durch langkettige organische Gruppen an den Zentralatomen der Keramik-aufbauenden Elemente (z.B. n-Butoxy, n-Hexoxy, 2-Ethylbutoxy, 2-Ethylhexoxy, 2-Ethoxyethoxy, 2-Ethoxypropoxy) oder durch Verwendung viskoser Lösungsmittel mit einer Viskositätszahl $\geq$ 10 mPa·s erhalten kann, dazu, daß das Sol durch das unterschiedliche Wasserangebot Kondensations-und damit Dichtegradienten aufweist. Durch vorsichtiges Verdampfen des Lösungsmittels und anschließender Überführung in das Gel können diese Dichteunterschiede erhalten bleiben. Wie oben definierte viskose Lösungsmittel sind z.B. Glycerin, höhere Alkanole wie Decanol und Dodecanol, Glykole, wie Ethylenglykol, Diethylenglykol und Triethylenglykol, und Poly(ethylenglykol)ether wie Diethylenglykoldimethylether und Triethylenglykoldimethylether.

Gegebenenfalls vorhandene photochemisch polymerisierbare Gruppen der eingesetzten Ausgangsverbindungen werden bei einer Bestrahlung, initiiert durch den Photoinitiator, polymerisiert. Außerdem findet natürlich die oben aufgezeigte Beeinflussung des anorganischen Netzwerkes zusätzlich statt. Es können also bei einer strukturierten Bestrahlung an den bestrahlten Stellen auf zweifache Weise verdichtete Stellen entstehen, die einen starken Dichtegradienten zu nicht belichteten Stellen aufweisen.

Thermisch polymerisierbare Gruppen können vor, während oder nach dem Bestrahlen unabhängig von der Beeinflußung der Polykondensation des anorganischen Netzwerkes durch den Photoinitiator polymerisiert werden. Dies kann gleichmäßig im gesamten Substrat geschehen oder mit thermischen Gradienten, wodurch zusätzlich zur Strukturierung des anorganischen Netzwerks eine unabhängige Strukturierung durch den unterschiedlichen Polymerisationsgrad der organischen Gruppen erreicht werden kann.

Zur Verbesserung der Elastizität, der mechanischen Eigenschaften und anderer Anwendungseigenschaften können die Sole der Verfahrensvariante B gegebenenfalls ein mit dem anorganischen Polykondensat copolymerisierbares, organisches Monomer oder Prepolymer enthalten.

Hierbei sind (Meth)acrylmonomere und -prepolymere bevorzugt, z.B. (Meth)acrylsäureester, wie Methyl-(meth)-acrylat, Ethyl(meth)acrylat, Butyl(meth)acrylat, Cyclohexyl(meth)acrylat, Glycidyl(meth)acrylat, Ethylenglykolmono(meth)acrylat, Diethylenglykolmono(meth)acrylat, Triethylenglykolmono(meth)acrylat, Allyl(meth)acrylat, 2-Ethoxyethyl(meth)acrylat, 2-Dimethylaminoethyl(meth)acrylat, Ethylenglykoldi(meth)acrylat, Diethylenglykoldi(meth)acrylat, Triethylenglykoldi(meth)acrylat, Butylenglykol(meth)acrylat, Neopentylglykoldi (meth)acrylat, Pentaerythrittri(meth)acrylat, Pentaerythrittetra(meth)acrylat und Trimethylolpropantri(meth) acrylat sowie Prepolymere dieser Monomeren. Die Bezeichnung "(Meth)acryl" bezieht sich sowohl auf Acrylsäureverbindungen als auch Methacrylsäureverbindungen.

Es können jedoch auch andere copolymerisierbare Verbindungen eingesetzt werden, z.B. Allylverbindungen, wie Allylalkohol und Allylglycidylether; N-Vinylpyrrolidon; Styrol; Divinylbenzol; Diallylphthalat; Dihydroxyverbindungen, wie Bisphenol A; und Aminoverbindungen, wie ε-Aminocapronsäure.

Der Mengenanteil dieser Comonomeren beträgt im allgemeinen 0 bis 50, bevorzugt 0 bis 30 Gew.-% bezogen auf das Gewicht der insgesamt eingesetzten Ausgangsverbindungen.

Das erfindungsgemäße Verfahren ermöglicht also die Beeinflussung der Reaktionen des Sol-Gel-Prozesses ohne Rührprozesse und Temperaturänderungen im System. Die durch strukturierte Bestrahlung auftretenden Strukturunterschiede im resultierenden Polykondensat ermöglichen eine Reihe von Anwendungen:

- Photostrukturierung von Sol-Gel-Materialien mittels Photolithographie und Laserwriting, die zu entsprechend strukturierten Beschichtungen oder Formkörpern aus Glas, Keramik oder anorganisch-organischen Hybridwerkstoffen führt;
- Schaffung von Dichtegradienten (die zu Variationen der Brechungsindices führen) in Sol-Gel-Formkörpern, die nach Tempern als nicht-lineare optische Materialien und optische Speicher Verwendung finden können;
- Erzeugung von Dichtegradienten in faserförmigen Formkörpern, die anschließend zu optischen Glasfasern verarbeitet werden können;
- Durch zusätzliches Einbringen eines Indikators in die Reaktion, der seine Farbe mit dem pH-Wert ändert, können farbig strukturierte Gläser und Keramiken hergestellt werden, die z. B. Anwendung als Filter, Dekore oder in der Optik finden können.
- Mit unstrukturierter Bestrahlung kann der gesamte Polykondensationsprozess beschleunigt werden, was z. B. die Verringerung der Polykondensationszeit von Schichten aus Sol-Gel-Material nach sich zieht, oder verlangsamt werden, was z. B. die spannungsfreie Herstellung von Formkörpern aus Glas, Keramik oder anorganisch-organischen Hybridwerkstoffen nach dem Sol-Gel-Prozeß ermöglicht.

Im folgenden wird die Erfindung anhand konkreter Beispiele weiter erläutert:

**Beispiel 1**

Strukturierung und Vernetzung:

Es werden 20,8 g Tetraethoxysilan mit 7,6 g Wasser, 20 g Ethanol und 5 g 1-Hydroxycyclohexylphenylketon unter Rühren vermischt. Die Mischung wird im Dunkeln bei 45°C 5 Tage gelagert. Anschließend werden Glassubstrate mit diesem Sol beschichtet. Eine anschließende Bestrahlung mit einer Quecksilbermitteldrucklampe, wobei sich zwischen Substrat und Lampe eine Strukturierungsmaske befindet, führt zu einer Vernetzung der belichteten Stellen, die bei der anschließenden Behandlung mit Ethylacetat im Gegensatz zu den unbelichteten Stellen nicht abgelöst werden. Dadurch wird eine Strukturierung eines rein anorganischen Glases erreicht.

**Beispiel 2**

Steuerung einer Reaktion durch pH-Wechsel:

Es werden 15,2 g Tetramethoxysilan mit 3,8 g 0,001 n Natronlauge, 20 g Methanol und 3 g Benzildimethylketal unter Rühren vermischt. Nach 30-minütiger Reaktionszeit wird das System nach dem Aufbringen als Beschichtung auf Glas oder Metall (das Lösungsmittel wird vorher schonend weitgehend abdestilliert) durch Bestrahlen mit einer Quecksilberniederdrucklampe auf pH = 7 eingestellt, so daß die weitere Kondensationsreaktion deutlich verlangsamt wird und dadurch spannungsfreiere Materialien hergestellt werden können. Entsprechend können mit diesem System auch Bulkmaterialien dargestellt werden, indem das Gelmaterial bestrahlt wird, und durch die verlangsamte Reaktion weniger Spannungen auftreten, die bei der weiteren Verarbeitung zu Rissen führen würden.

**Patentansprüche**

1. Verfahren zur photoinitiierten Steuerung der anorganischen Netzwerkbildung beim Sol-Gel-Prozeß, dadurch gekennzeichnet, daß man
   a) in einem flüssigen Reaktionsmedium eine oder mehrere hydrolytisch polykondensierbare Verbindungen von Glas oder Keramik aufbauenden Elementen, ausgenommen Siliciumverbindungen mit polymerisierbaren organischen Gruppen, einer hydrolytischen Polykondensation unter Bildung eines Sols

unterwirft und
b) das entstandene Sol in Gegenwart eines Photoinitiators, der beim Bestrahlen den pH-Wert des Reaktionsmediums verändern kann, strukturiert oder unstrukturiert mit Strahlung eines Wellenlängenbereichs, in dem der Photoinitiator absorbiert, bestrahlt.

2. Verfahren nach Anspruch 1, dadurch gekennzeichnet, daß die Verbindungen von Glas oder Keramik aufbauenden Elementen ausgewählt sind aus Verbindungen von Elementen der Hauptgruppen Ia bis Va und der Nebengruppen IIb bis VIIIb des Periodensystems, vorzugsweise von Silicium, Aluminium, Bor, Blei, Zinn, Titan, Zink, Zirkonium und/oder den Lanthaniden, denen Verbindungen der Elemente Phosphor, Arsen, Antimon, Wismut, Chrom, Molybdän, Wolfram, Mangan, Eisen, Kobalt, Nickel, Vanadium, der Alkali- und/oder Erdalkalimetalle beigemengt sein können.

3. Verfahren nach Anspruch 1 oder 2, dadurch gekennzeichnet, daß man Mischungen von
(1) einer oder mehreren Siliciumverbindungen der Formel (I)

$$R_{4-x}SiR^1_x \qquad (I)$$

worin x = 1 bis 3 ist, die Reste R, die gleich oder verschieden sein können, vom Siliciumatom hydrolytisch abspaltbare Reste wie Wasserstoff, Halogen, Alkoxy, Acyloxy, Alkylcarbonyl, Alkoxycarbonyl oder $NR'_2$ (R' = H und/oder Alkyl) sind, die Reste $R^1$, die gleich oder verschieden sein können, nichtpolymerisierbare, vom Siliciumatom nicht hydrolytisch abspaltbare organische Gruppen wie Alkyl, Phenyl, Phenylalkyl und Alkylphenyl, die gegebenenfalls mit Halogen oder $NR'_2$ substituiert sein können, sind, wobei diese Reste durch O- oder S-Atome oder die Gruppe -NR' unterbrochen sein können, und
(2) einer oder mehreren Verbindungen der Formel (I), worin x = 0 ist und/oder
(3) einer oder mehreren Verbindungen von Glas oder Keramik aufbauenden Elementen außer Silicium einsetzt.

4. Verfahren nach einem der Ansprüche 1 bis 3, dadurch gekennzeichnet, daß der Photoinitiator ausgewählt ist aus einer oder mehreren photodissoziierenden Verbindungen, die eine Carbonyl-, Ketal-, Peroxid- oder reaktive Azogruppe enthalten.

5. Verfahren nach Anspruch 4, dadurch gekennzeichnet, daß der Photoinitiator ausgewählt ist aus 1-Hydroxycyclohexylphenylketon, einer Mischung von 1-Hydroxycyclohexylphenylketon + Benzophenon, 2-Methyl-1-[4-(methylthio)phenyl]-2-morpholinopropan-1-on, 2-Hydroxy-2-methyl-1-phenylpropan-1-on, 1-(4-Isopropylphenyl)-2-hydroxy-2-methylpropan-1-on, einer Mischung von Arylketonen des Benzophenontyps, Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon, Dibenzosuberon, Dibenzoylperoxid, t-Butylperbenzoat und Azobisisobutyronitril.

6. Verfahren nach einem der Ansprüche 1 bis 5, dadurch gekennzeichnet, daß der Photoinitiator innerhalb eines Wellenlängenbereichs von 190 - 360 nm absorbiert.

7. Verfahren nach einem der Ansprüche 1 bis 6, dadurch gekennzeichnet, daß der Photoinitiator bereits zu Beginn der Reaktion hinzugefügt wird.

8. Verfahren nach einem der Ansprüche 1 bis 6, dadurch gekennzeichnet, daß der Photoinitiator im Verlauf der hydrolytischen Polykondensation, z. B. nach Erreichen des Sol-Zustands, hinzugefügt wird.

9. Verfahren nach einem der Ansprüche 1 bis 8, dadurch gekennzeichnet, daß die hydrolytische Polykondensation bis zum Erreichen des Sol-Zustands bei pH 4,5 bis 9 durchgeführt wird.

10. Verfahren nach einem der Ansprüche 1 bis 9, dadurch gekennzeichnet, daß man im Anschluß an die Polykondensation eine thermische Behandlung des Polykondensats in einem Temperaturbereich von 550 - 1200°C (Glas), 1300 - 2000°C (Keramik) und 90 - 280°C (anorganisch-organische Hybridwerkstoffe) durchführt.

11. Verfahren zur photoinitiierten Steuerung der anorganischen Netzwerkbildung beim Sol-Gel-Prozeß, dadurch gekennzeichnet, daß man in einem wasserfreien, einen Alkohol enthaltenden Reaktionsmedium, das ein oder mehrere hydrolytisch polykondensierbare Verbindungen von Elementen, die Glas oder Keramik aufbauen, und einen Photoinitiator, der beim Bestrahlen Wasser durch eine photochemische Reaktion oder eine Folgereaktion freisetzen kann, enthält, durch strukturiertes oder unstrukturiertes Bestrahlen mit Strahlung eines Wellenlängenbereichs, in dem der Photoinitiator absorbiert, Wasser freisetzt und so die hydrolytische Polykondensation bewirkt.

12. Verfahren nach Anspruch 11, dadurch gekennzeichnet, daß man Verbindungen der Elemente Aluminium, Titan und/oder Zirkonium einsetzt.

13. Verfahren nach Anspruch 11 oder 12, dadurch gekennzeichnet, daß in Intervallen bestrahlt wird.

14. Verfahren nach einem der Ansprüche 11 bis 13, dadurch gekennzeichnet, daß man als Photoinitiator einen Perbenzoesäureester oder Dibenzoylperoxid verwendet.

15. Verfahren nach einem der Ansprüche 11 bis 13, dadurch gekennzeichnet, daß der Photoinitiator ausgewählt ist aus photodissoziierenden Verbindungen, die eine Carbonyl- oder Ketalgruppe aufweisen, und das Reaktionsmedium eine Verbindung enthält, die unter saurer oder alkalischer Katalyse Wasser abspalten kann.

16. Verfahren nach Anspruch 15, dadurch gekennzeichnet, das der Photoinitiator ausgewählt ist aus 1-Hydroxycyclohexylphenylketon, einer Mischung von 1-Hydroxycyclohexylphenylketon + Benzophenon, 2-Methyl-1-[4-(methylthio)phenyl]-2-morpholinopropan-1-on, 2-Hydroxy-2-methyl-1-phenylpropan-1-on, 1-(4-Isopropylphenyl)-2-hydroxy-2-methylpropan-1-on, einer Mischung von Arylketonen des Benzophenontyps, Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

17. Verfahren nach Anspruch 15 oder 16, dadurch gekennzeichnet, daß die Verbindung, die Wasser abspalten kann, ausgewählt ist aus geminalen Diolen, Hemihydraten von Aldehyden mit mehr als 7 C-Atomen, Verbindungen, die in $\alpha$- oder $\beta$-Position zu mindestens einer Carbonyl-, Carboxyl-, Nitril-, Nitro- oder Sulfonylgruppe eine Hydroxylgruppe aufweisen und tertiären Alkoholen, die in $\alpha$-Stellung ein Wasserstoffatom aufweisen.

18. Verfahren nach einem der Ansprüche 11 bis 17, dadurch gekennzeichnet, daß nach dem Bestrahlen weiteres Wasser zur Reaktionsmischung gegeben wird.

19. Verfahren nach einem der Ansprüche 11 bis 18, dadurch gekennzeichnet, daß man die Polykondensation unter Bestrahlung bis zum Sol-Zustand durchführt und das Sol mit oder ohne weiteres Bestrahlen zu einem Gel weiterkondensiert.

20. Verfahren nach Anspruch 19, dadurch gekennzeichnet, daß man im Anschluß an die Polykondensation das erhaltene Polykondensat einer thermischen Behandlung in einem Temperaturbereich von 550 - 1200°C (Glas), 1300 - 2000°C (Keramik) und 90 - 280°C (anorganisch-organische Hybridwerkstoffe) unterzieht.

## Claims

1. A process for photoinitiated control of the inorganic network formation in the sol-gel process, characterized in that
   a) in a liquid reaction medium one or more hydrolytically polycondensable compounds of constituent elements of glass or ceramics, with the exception of silicon compounds having polymerizable organic groups, are subjected to a hydrolytical polycondensation to form a sol, and
   b) the resulting sol is irradiated, in a structured or unstructured manner, in the presence of a photoinitiator which, upon irradiation, can change the pH-value of the reaction medium, with radiation of a wavelength range in which the photoinitiator absorbs.

2. A process according to claim 1, wherein the compounds of constituent elements of glass or ceramics are selected from compounds of elements of the main groups Ia to Va and the subgroups IIb to VIIIb of the periodic system, preferably from silicon, aluminum, boron, lead, tin, titanium, zinc, zirconium and/or lanthanides, to which compounds of the elements phosphorus, arsenic, antimony, bismuth, chromium, molybdenum, tungsten, manganese, iron, cobalt, nickel, vanadium, alkali and/or alkaline earth metals may

be admixed.

3. A process according to claim 1 or 2, wherein mixtures of
(1) one or more silicon compounds of the formula (I)

$$R_{4-x}SiR^1_x \qquad (I)$$

wherein x = 1 to 3, the radicals R, which may be identical or different, are radicals capable of being cleaved hydrolytically from the silicon atom, such as hydrogen, halogen, alkoxy, acyloxy, alkylcarbonyl, alkoxycarbonyl or $NR'_2$ (R′ = H and/or alkyl), the radicals $R^1$, which may be identical or different, are non-polymerizable organic groups not capable of being cleaved hydrolytically from the silicon atom, such as alkyl, phenyl, phenylalkyl and alkylphenyl, which optionally can be substituted with halogen or $NR'_2$, it being possible that said radicals are interrupted by 0 or S atoms or the group -NR′, and
(2) one or more compounds of the formula (I), wherein x = 0 and/or
(3) one or more compounds of constituent elements of glass or ceramics other than silicon are employed.

4. A process according to any of claims 1 to 3, wherein the photoinitiator is selected from one or more photodissociating compounds containing a carbonyl, ketal, peroxide or reactive azo group.

5. A process according to claim 4, wherein the photoinitiator is selected from 1-hydroxycyclohexyl phenyl ketone, a mixture of 1-hydroxycyclohexyl phenyl ketone + benzophenone, 2-methyl-1-[4-(methylthio)phenyl]-2-morpholinopropane-1-one, 2-hydroxy-2-methyl-1-phenylpropane-1-one, 1-(4-isopropylphenyl)-2-hydroxy-2-methylpropane-1-one, a mixture of aryl ketones of the benzophenone-type, benzophenone, 2-chlorothioxanthone, 2-methylthioxanthone, 2-isopropylthioxanthone, benzoin, 4,4′-dimethoxy benzoin, benzoin ethyl ether, benzoin isopropyl ether, benzil dimethyl ketal, 1,1,1′-trichloroacetophenone, diethoxyacetophenone, dibenzosuberone, dibenzoylperoxide, t-butyl perbenzoate and azobisisobutyronitrile.

6. A process according to any of claims 1 to 5, wherein the photoinitiator absorbs within a wave range of 190 - 360 nm.

7. A process according to any of claims 1 to 6, wherein the photoinitiator is already added at the beginning of the reaction.

8. A process according to any of claims 1 to 6, wherein the photoinitiator is added in the course of the hydrolytic polycondensation, e.g., after reaching the sol-state.

9. A process according to any of claims 1 to 8, wherein the hydrolytical polycondensation is carried out until the sol-state is reached at pH 4.5 to 9.

10. A process according to any of claims 1 to 9, wherein subsequent to the polycondensation a thermal treatment of the polycondensate is conducted in a temperature range of from 550 - 1200°C (glass), 1300 - 2000°C (ceramics) and 90 - 280°C (inorganic-organic hybrid materials).

11. A process for the photoinitiated control of the inorganic network formation in the sol-gel process, characterized in that in an anhydrous reaction medium containing an alcohol and one or more hydrolytically polycondensable compounds of constituent elements of glass or ceramics and a photoinitiator, which upon irradiation is capable of releasing water by way of a photo-chemical reaction or a secondary reaction, water is released and thus the hydrolytic polycondensation is effected by irradiation, in a structured or non-structured manner, with radiation of a wave-length range in which the photoinitiator absorbs.

12. A process according to claim 11, wherein compounds of the elements aluminum, titanium and/or zirconium are employed.

13. A process according to claim 11 or 12, wherein irradiation is carried out in intervals.

14. A process according to any of claims 11 to 13, wherein a perbenzoic acid ester or dibenzoyl peroxide is used as the photoinitiator.

15. A process according to any of claims 11 to 13, wherein the photoinitiator is selected from photodissociating compounds having a carbonyl or ketal group, and the reaction medium comprises a compound capable of cleaving off water upon acidic or alkaline catalysis.

16. A process according to claim 15, wherein the photoinitiator is selected from 1-hydroxycyclohexyl phenyl ketone, a mixture of 1-hydroxycyclohexyl phenyl ketone + benzophenone, 2-methyl-1-[4-(methylthio)phenyl]-2-morpholinopropane-1-one, 2-hydroxy-2-methyl-1-phenylpropane-1-one, 1-(4-isopropylphenyl)-2-hydroxy-2-methylpropane-1-one, a mixture of arylketones of the benzophenone type, benzophenone, 2-chlorothioxanthone, 2-methylthioxanthone, 2-isopropylthioxanthone, benzoin, 4,4'-dimethoxybenzoin, benzoin ethyl ether, benzoin isopropyl ether, benzil dimethyl ketal, 1,1,1-trichloroacetophenone, diethoxyacetophenone and dibenzosuberone.

17. A process according to claim 15 or 16, wherein the compound capable of cleaving off water is selected from geminal diols, hemihydrates of aldehydes having more than 7 C-atoms, compounds having a hydroxyl group in the $\alpha$- or $\beta$-position relative to at least one carbonyl, carboxyl, nitrile, nitro or sulfonyl group, and tertiary alcohols having a hydrogen atom in the $\alpha$-position.

18. A process according to any of claims 11 to 17, wherein further water is added to the reaction mixture after the irradiation.

19. A process according to any of claims 11 to 18, wherein the polycondensation is carried out under irradiation up to the sol state and the sol is further condensed with or without further irradiation to form a gel.

20. A process according to claims 19, wherein subsequent to the polycondensation the polycondensate obtained is subjected to a thermal treatment in a temperature range of from 550 - 1200°C (glass), 1300 - 2000°C (ceramics), and 90 - 280°C (inorganic-organic hybride materials).

## Revendications

1. Procédé de commande photo-amorcée de la formation de réseaux minéraux dans un procédé sol-gel, caractérisé en ce que
(a) on soumet dans un milieu liquide de réaction un ou plusieurs composés ,polycondensables par voie hydrolytique,d'éléments formateurs d'un verre ou d'une matière céramique,à l'exclusion de composés du silicium comportant des groupes organiques polymérisables ,à une polycondensation hydrolytique avec formation d'un sol, et
(b) on soumet le sol résultant,en présence d'un photo-amorceur pouvant modifier sous irradiation la valeur du pH du milieu de réaction,structuré ou non structuré,à une irradiation par un rayonnement se situant dans un domaine de longueurs d'ondes dans lequel le photo-amorceur absorbe .

2. Procédé selon la revendication 1 ,caractérisé en ce que les composés d'éléments formateurs d'un verre ou d'une matière céramique sont choisis parmi des composés d'éléments des groupes principaux Ia à Va et des sous-groupes IIb à VIIIb du tableau périodique,avantageusement du silicium ,de l'aluminium, du bore, du plomb,de l'étain, de titane,du zinc,,du zirconium et/ou des lanthanides,auxquels on peut incorporer par mélangeage des composés des éléments phosphore, arsenic,antimoine, bismuth,chrome,molybdène,tungstène,manganèse,fer,cobalt, nickel,vanadium,des métaux alcalins et/ou alcalino-terreux.

3. Procédé selon la revendication 1 ou 2 ,caractérisé en ce qu'on utilise des mélanges de :
(a) un ou plusieurs composés du silicium ,de formule (I)

$$R_{4-x}SiR^1_x \qquad (I)$$

dans laquelle x vaut 1 à 3 ;les restes R ,qui peuvent être identiques ou différents,représentent des restes pouvant être séparés par hydrolyse de l'atome de silicium,comme un atome d'hydrogène ou d'halogène ,un reste alcoxy , acyloxy , alkylcarbonyle , alcoxycarbonyle ou $NR'_2$ (R' représentant H et/ou un groupe alkyle); les restes $R^1$ ,qui peuvent être identiques ou différents,représentent des groupes organiques non polymérisables,non séparables par hydrolyse de l'atome de silicium, comme un groupe alkyle,phényle,phénylalkyle et alkylphényle , qui peuvent éventuellement être substitués par de l'halogène ou par $NR'_2$ , ces restes pouvant être interrompus par des atomes de 0 ou de S ou par les groupes -NR',
(b) un ou plusieurs composés de formule (I) , dans laquelle x vaut 0 , et/ou
(c) un ou plusieurs composés d'éléments formateurs d'un verre ou d'une matière céramique,à l'exclusion du silicium.

4. Procédé selon l'une des revendications 1 à 3 , caractérisé en ce que le photo-amorceur est choisi un ou

plusieurs composés photodissociables,et qui contiennent un groupe carbonyle, cétal , peroxyde ou azoïque réactif .

5. Procédé selon la revendication 4 ,caractérisé en ce que le photo-amorceur est choisi parmi la 1-hydroxycyclohexylphénylcétone, un mélange de 1-hydroxycyclohexylphénylcétone plus de la benzophénone,la 2-méthyl-1(4-(méthylthio)phényl)-2-morpholinopropane-1-one,la 2-hydroxy-2-méthyl-1-phénylpropane-1-one ,la 1-(4-isopropylphényl)-2-hydroxy-2-méthylpropane-1-one, un mélange d'arylcétones du type benzophénone,la benzophénone, la 2-chlorothioxanthone, la 2-méthylthioxanthone, la 2-isopropylthioxanthone , la benzoïne , la 4,4'-diméthoxybenzoine ,l'éther éthylique de la benzoïne ,l'éther isopropylique de la benzoïne,le diméthylcétal de benzile, la 1,1,1-trichloracétophénone,la diéthoxyacétophénone,la dibenzosubérone, le peroxyde de dibenzoyle, le perbenzoate de t-butyle,et l'azobisisobutyronitrile .

6. Procédé selon l'une des revendications 1 à 5 ,caractérisé en ce que le photo-amorceur absorbe dans un domaine de longueurs d'onde de 190 à 360 nm.

7. Procédé selon l'une des revendications 1 à 6 ,caractérisé en ce que le photo-amorceur est introduit déjà au début de la réaction .

8. Procédé selon l'une des revendications 1 à 6,caractérisé en ce que le photoamorceur est introduit au cours de la polycondensation hydrolytique , par exemple après que soit atteint l'état de sol .

9. Procédé selon l'une des revendications 1 à 8,caractérisé en ce que la polycondensation hydrolytique est conduite jusqu'à ce que soit atteint l'état de sol à un pH de 4,5 à 9 .

10. Procédé selon l'une des revendications 1 à 9 ,caractérisé en ce qu'à la suite de la polycondensation,on effectue un traitement thermique du polycondensat dans un domaine de la température de 550 à 1 200 °C (verre) ,de 1 300 à 2 000 °C (matière céramique) et de 90 à 280 °C ( matériaux hybrides minéraux-organiques) .

11. Procédé de commande photo-amorcée de formation d'un réseau minéral dans un procédé sol-gel , caractérisé en ce que, dans un milieu anhydre de réaction contenant un alcool et qui contient un ou plusieurs composés,,polycondensables par voie hydrolytique,d'éléments formateurs d'un verre ou d'une matière céramique,ainsi qu'un photo-amorceur qui peut libérer de l'eau par une réaction photochimique ou par une réaction subséquente, on provoque une libération d'eau par une irradiation structurée ou non structurée à l'aide d'un rayonnement se situant dans un domaine de longueurs d'ondes dans lequel le photo-amorceur absorbe et l'on provoque ainsi la polycondensation hydrolytique.

12. Procédé selon la revendication 11 ,caractérisé en ce qu'on utilise des composés des éléments aluminium , titane, et/ou zirconium .

13. Procédé selon la revendication 11 ou 12, caractérisé en ce qu'on effectue l'irradiation par intervalles .

14. Procédé selon l'une des revendications 11 à 13 , caractérisé en ce qu'on utilise comme photo-amorceur un ester de l'acide perbenzoïque ou le peroxyde de dibenzoyle .

15. Procédé selon l'une des revendications 11 à 13 , caractérisé en ce que le photo-amorceur est choisi parmi des composés capables de subir une photodissociation,et qui présentent un groupe carbonyle ou cétal,et en ce que le milieu de réaction contient un composé qui peut scinder l'eau par catalyse acide ou alcaline .

16. Procédé selon la revendication 15 , caractérisé en ce que le photo-amorceur est choisi parmi la 1-hydroxycyclohexylphénylcétone, un mélange de 1-hydroxycyclohexylphénylcétone et de benzophénone ,la 2-méthyl-1-(4-(méthylthio)phényl)2-morpholinopropane-1-one, la 2-hydroxy-2-méthyl-1-phénylpropane -1-one, la 1-(4-isopropylphényl)-2-hydroxy-2-méthylpropane-1-one , un mélange d'arylcétones du type benzophénone ,la benzophénone, la 2-chlorothioxanthone , la 2-méthylthioxanthone, la 2-isopropylthioxanthone , la Benzoïne , la 4,4'-diméthoxybenzoïne, l'éther éthylique de la benzoine, l'éther isopropylique de la benzoine, le diméthylcétal de benzile ,la 1,1,1-trichloracétophénone, la diéthoxyacétophénone ,et la dibenzosubérone .

17. Procédé selon la revendication 15 ou 16 , caractérisé en ce que le composé pouvant dégager de l'eau par scission est choisi parmi des diols géminés , des hémi-hydrates d'aldéhydes comportant plus de 7

atomes de carbone ,des composés présentant un groupe hydroxyle en position alpha ou beta par rapport à au moins un groupe carbonyle ,carboxyle , nitrile, nitro ou sulfonyle,et des alcools tertiares présentant un atome d'hydrogène en position alpha .

**18.** Procédé selon l'une des revendications 11 à 17 , caractérisé en ce qu'après l'irradiation ou exposition, on ajoute un supplément d'eau au mélange réactionnel .

**19.** Procédé selon l'une des revendications 11 à 18 , caractérisé en ce qu'on conduit la polycondensation sous irradiation jusqu'à l'état de sol ,et en ce qu'on soumet le sol, avec ou sans irradiation supplémentaire ,à une poursuite de la condensation donnant un gel .

**20.** Procédé selon la revendication 19 , caractérisé en ce qu'après la polycondensation,on soumet le polycondensat ainsi obtenu à un traitement thermique dans un domaine de la température de 550 à 1 200°C (verre) , de 1 300 à 2 000 °C (matière céramique) et de 90 à 280 °C (matériaux hybrides minéraux-organiques ) .

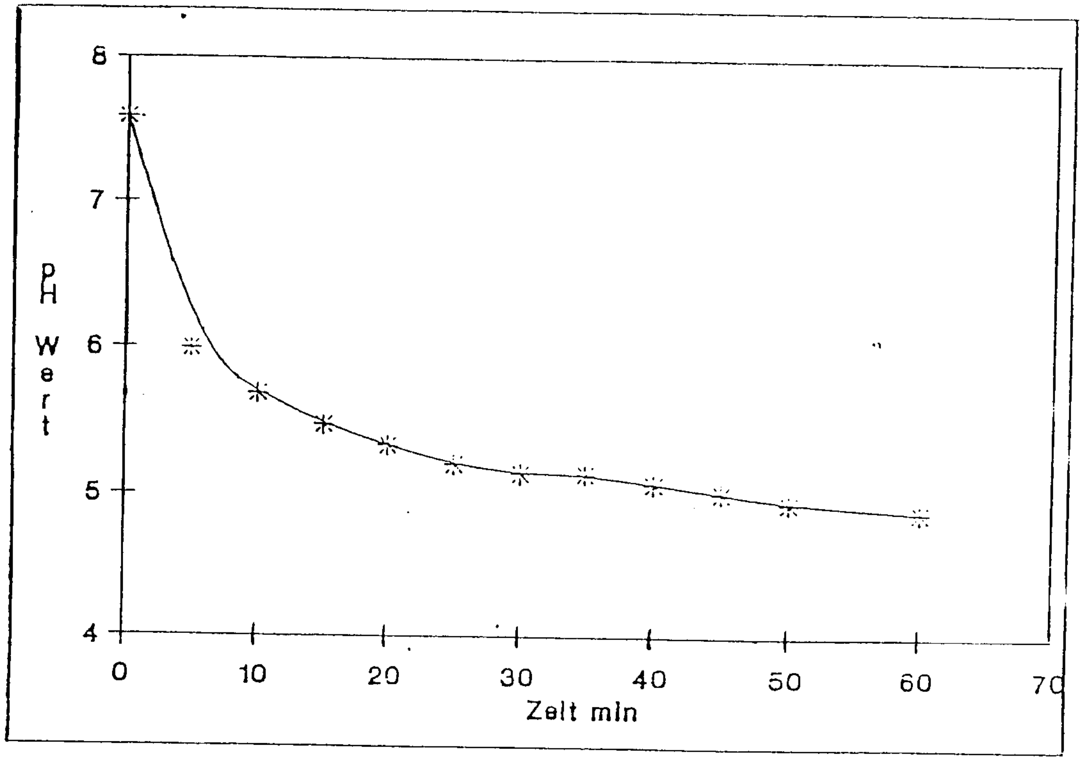


Fig. 1: Abhängigkeit des pH-Wertes einer ethanolisch/wässrigen Lösung von 1-Hydroxycyclohexylphenylketon von der Bestrahlungsdauer mit einer Quecksilberniederdrucklampe